# FASCICULE DE BREVET EUROPEEN

(11) **EP 2 473 029 B1**
(45) Date de publication et mention de la délivrance du brevet: **27.07.2016**
(21) Numéro de dépôt: 10744967.0
(22) Date de dépôt: 25.08.2010
(51) Int. Cl.: A01K 45/00

(54) **PROCEDE D'ANALYSE ET/OU DE TRAITEMENT D'UN OEUF FECONDE ET SYSTEME CORRESPONDANT**
VERFAHREN ZUR ANALYSE UND/ODER BEHANDLUNG EINER BEFRUCHTETEN EIZELLE UND ENTSPRECHENDES SYSTEM
METHOD FOR ANALYZING AND/OR TREATING A FERTILIZED EGG, AND CORRESPONDING SYSTEM

(30) Priorité: 03.09.2009 FR 0904191
(43) Date de publication de la demande: 11.07.2012
(73) Titulaire: Egg-Chick Automated Technologies, 29400 Landivisiau (FR)
(72) Inventeur: Adjanohoun, Ephrem, 35740 Pace (FR)
(74) Mandataire: Nederlandsch Octrooibureau
(86) Numéro de dépôt international: PCT/EP2010/062421
(87) Numéro de publication internationale: WO 2011/036017

(56) Documents cités:
- WO-A1-00/40079
- WO-A2-2006/047458
- US-A- 4 469 047
- US-A- 4 593 646
- US-A- 5 339 766
- US-A1- 2003 172 392
- US-A1- 2005 263 079

## Description

La présente invention concerne un procédé d'analyse et/ou de traitement d'un oeuf fécondé et un système apte à mettre en oeuvre ledit procédé.

Dans l'industrie de la volaille, notamment la production de poussins, il est connu de traiter les oeufs pour soigner les poussins contre des contaminations infectieuses verticales ou les immuniser contre des maladies infectieuses et ainsi réduire leur taux de mortalité. Pour cela, il est connu d'immerger totalement l'oeuf dans une solution antibiotique. Les résultats obtenus avec cette méthode ne sont toutefois pas très bons.

Il est également connu d'injecter directement dans les oeufs une substance de traitement, généralement du vaccin et/ou des antibiotiques. L'injection est effectuée au moyen d'un injecteur placé au dessus de l'oeuf, l'extrémité aplatie de l'oeuf située à proximité de la chambre à air étant positionnée en haut. Une aiguille creuse est introduite dans l'oeuf par son extrémité aplatie, traverse la chambre à air de l'oeuf pour atteindre les liquides embryonnaires et/ou les chambres chorioallantoïques de l'oeuf. L'injection est généralement réalisée à un stade tardif du cycle d'incubation, à 18 ou 19 jours dans le cas d'un poulet, soit 2 ou 3 jours avant l'éclosion. Cette méthode présente des inconvénients. L'injection étant réalisée à un stade tardif de l'incubation, la durée du traitement est très courte (2 à 3 jours). Par ailleurs, s'agissant des quantités de produit injecté, elles sont réduites et limitées en général à moins de 0.05 millilitre afin de respecter les équilibres osmotiques très sensibles des poches de liquides embryonnaires nécessaires au développement de l'embryon. Les produits injectables sont toujours sous forme liquide. L'injection au niveau de l'extrémité aplatie de l'oeuf peut générer des saignements avec des conséquences néfastes sur le développement de l'embryon du fait de la présence de vaisseaux sanguins. Enfin, l'injection d'un produit de traitement, dans ou à proximité des liquides embryonnaires, génère souvent des contaminations bactériennes et peut affecter négativement le développement de l'embryon et l'éclosion du poussin.

La présente invention propose un procédé d'analyse et/ou de traitement d'un oeuf fécondé pouvant être appliqué à un stade plus précoce du cycle d'incubation et permettant de résoudre tout ou partie des inconvénients précités.

Plus particulièrement, la présente invention concerne un procédé d'analyse et/ou de traitement d'un oeuf fécondé, caractérisé en ce qu'il comporte une étape de ponction et/ou d'injection de substance dans le sac d'albumen de l'oeuf, ladite étape de ponction et/ou d'injection étant réalisée par perçage d'un trou dans la coquille à proximité de l'extrémité pointue de l'oeuf et passage d'une aiguille creuse dans ledit trou à une profondeur adéquate de manière à amener l'extrémité distale de ladite aiguille dans le sac d'albumen directement sans traverser les poches de liquides embryonnaires ou les organes vitaux de l'embryon et ponctionner de la substance du sac d'albumen et/ou injecter une substance de traitement dans ledit sac d'albumen.

L'étape de ponction et/ou injection est réalisée sur un oeuf en cours d'incubation. L'opération peut se dérouler à partir du cinquième jour d'incubation et jusqu'à 2 jours avant l'éclosion. Dans le cas d'un poulet dont le cycle d'incubation comprend en moyenne 21 jours, l'étape de ponction et/ou injection est réalisée sur un oeuf fécondé ayant entre 5 et 19 jours d'incubation. A ce stade du cycle d'incubation de l'oeuf, le sac d'albumen est formé et positionné à proximité de l'extrémité pointue de l'oeuf, à l'opposé de la chambre à air. Le contenu du sac d'albumen et les membranes traversées par l'aiguille n'étant pas ou très peu vascularisées, l'introduction d'une aiguille dans cette partie de l'oeuf ne provoque aucun saignement et ne perturbe pas le développement ultérieur de l'oeuf. En outre, à ce stade d'incubation, la substance contenue dans le sac d'albumen étant très peu humide et d'une très grande compacité, élasticité et viscosité, il y a très peu de risque qu'une contamination et/ou des bactéries s'y développent.

Par ailleurs, à ce stade d'incubation, le contenu du sac d'albumen est isolé structurellement du reste de l'embryon et n'est utilisé que très lentement par celui-ci. Il est donc possible d'y prélever ou d'y introduire des quantités significatives de matière sans provoquer la mort de l'embryon et en évitant des déséquilibres pouvant nuire au développement immédiat ou ultérieur de l'oeuf.

Dans la suite de la description, on entend par aiguille creuse une structure comprenant un ou plusieurs canaux internes creux permettant le passage d'une substance à l'intérieur.

Selon un mode de réalisation, le procédé ne comporte qu'une étape de ponction. La ponction de la substance contenue dans le sac d'albumen est par exemple effectuée à des fins d'analyse pour caractériser l'oeuf ou l'embryon, par exemple pour déterminer son stade de développement ou son sexe.

Selon un autre mode de réalisation particulier, le procédé ne comporte qu'une étape d'injection de substance dans le sac d'albumen. La substance injectée, appelée substance de traitement, est une substance nutritive ou hydratante ou une substance de diagnostic ou une substance thérapeutique destinée à traiter des pathologies, à stimuler l'immunité et à favoriser le développement de l'embryon de l'oeuf ou celui du poussin après son éclosion. La substance injectée peut être à l'état solide (soluble ou pas), ou à l'état liquide (fluide ou pâteux), ou à l'état gazeux ou de consistance mixte ou une combinaison de substances ayant des états différents.

Selon un autre mode de réalisation particulier, la ponction de substance dans le sac d'albumen est effectuée pour faire de la place dans le sac d'albumen et pouvoir ensuite y injecter, en remplacement, une substance de traitement. Le procédé comporte alors une étape de ponction d'une substance dans le sac d'albumen de l'oeuf suivie d'une étape d'injection d'une substance de traitement différente de la substance ponctionnée dans le sac d'albumen. Ce mode de réalisation permet d'injecter des quantités plus importantes de substance de traitement dans l'oeuf.

Selon une application particulière, la substance de traitement injectée dans l'oeuf est une substance nutritive destinée à favoriser la croissance de l'embryon puis du poussin après éclosion. Pendant les derniers jours d'incubation, le contenu du sac d'albumen est transféré dans le sac vitellin qui, après la naissance du poussin, se retrouve dans l'abdomen du poussin. La substance nutritive est alors utilisée par le poussin lors de ses premiers jours d'existence.

Selon l'invention, la quantité de substance ponctionnée ou injectée après ponction est comprise entre 0,06 millilitre et 3 millilitres, de préférence entre à 0.5 millilitre et 2 millilitres, sans effet néfaste sur le développement ultérieur de l'embryon et sur l'éclosion du poussin.

Selon un mode de réalisation particulier, la quantité de substance de traitement injectée est sensiblement égale à la quantité de substance ponctionnée. Cependant, étant donnée la présence de la chambre à air, ces deux quantités ne sont pas nécessairement égales. La taille de la chambre à air peut varier pour compenser la différence entre la quantité ponctionnée et la quantité injectée.

Pour réduire le nombre de manipulations lors des étapes de ponction et d'injection, la même aiguille creuse est utilisée pour ponctionner la substance du sac d'albumen et injecter la substance de traitement et la ponction et l'injection de substance sont réalisées à travers le même trou de l'oeuf pour ne pas avoir à enlever l'aiguille du sac de l'albumen entre l'étape de ponction et l'étape d'injection.

L'invention concerne également un système de traitement d'un oeuf fécondé apte à mettre en oeuvrele procédé et comprenant au moins un dispositif de ponction et d'injection, lequel dispositif comporte:
- une aiguille, comprenant au moins un canal interne, apte à traverser ledit oeuf pour atteindre le sac d'albumen dudit oeuf;
- des moyens de ponction, de type seringue, aptes à être en communication avec le canal interne de ladite aiguille, pour ponctionner au travers de ladite aiguille de la substance dans le sac d'albumen de l'oeuf; et
- des moyens d'injection, distincts desdits moyens de ponction et aptes à être en communication avec le canal interne de ladite aiguille, pour injecter au travers de ladite aiguille une substance de traitement dans le sac d'albumen de l'oeuf, ladite substance de traitement se substituant au moins partiellement à la substance ponctionnée.

Selon un mode de réalisation particulier, les moyens de ponction comprennent un premier corps tubulaire et un premier piston monté coulissant dans le premier corps tubulaire de manière à définir une première chambre de volume variable destinée à recevoir la substance ponctionnée provenant du sac d'albumen de l'oeuf, ledit premier corps tubulaire étant muni d'un orifice d'entrée débouchant dans ladite première chambre et apte à être en communication avec le canal interne de l'aiguille et d'un orifice de sortie pour refouler hors de ladite première chambre, par déplacement dudit premier piston, la substance ponctionnée et les moyens d'injection comprennent un second corps tubulaire et un second piston monté coulissant dans le second corps tubulaire de manière à définir une seconde chambre de volume variable destinée à stocker la substance de traitement à injecter, ledit second corps tubulaire étant muni d'un orifice de sortie apte à être en communication avec le canal interne de l'aiguille pour refouler par déplacement du second piston la substance de traitement stockée dans ladite seconde chambre vers l'aiguille.

Selon un mode de réalisation particulier, les moyens de ponction comprennent des moyens d'aspiration aptes à créer une dépression dans ladite première chambre lorsque le premier piston est dans une position écartée dans laquelle il est écarté d'une distance prédéterminée non nulle de la paroi de l'extrémité distale du premier corps tubulaire.

En variante, la dépression est créée par déplacement dudit premier piston entre une position de butée dans laquelle ledit premier piston est en butée contre la paroi de l'extrémité distale du premier corps tubulaire et ladite position écartée.

Selon un mode de réalisation particulier, le second corps tubulaire est monté sur le premier piston et l'orifice de sortie dudit second corps tubulaire est ménagé dans ledit premier piston de manière à obtenir un dispositif relativement compact.

Selon un mode de réalisation particulier, l'orifice de sortie du second corps tubulaire est positionné sur le premier piston pour être en vis-à-vis avec l'orifice d'entrée du premier corps tubulaire lorsque le premier piston est en position de butée.

Selon un mode de réalisation particulier, l'orifice de sortie du second corps tubulaire comporte au moins un trou ayant une section réduite pour empêcher tout passage de substance de la première chambre vers la seconde chambre. En variante, l'orifice de sortie du second corps tubulaire est de plus grande section et est munie d'une grille perforée de trous ayant une section réduite pour empêcher tout passage de substance de la première chambre vers la seconde chambre.

Selon un mode de réalisation particulier, le système selon l'invention comprend en outre des moyens de déplacement aptes à déplacer le dispositif de ponction et d'injection entre une position de repos dans laquelle l'aiguille est en dehors de l'oeuf à traiter et une ponction active de ponction et/ou d'injection, dite position active, dans laquelle l'extrémité distale de l'aiguille est dans le sac d'albumen de l'oeuf à traiter.

L'invention sera mieux comprise, et d'autres buts, détails, caractéristiques et avantages apparaîtront plus clairement au cours de la description explicative détaillée qui va suivre de deux modes de réalisation particuliers actuellement préférés de l'invention, en référence au dessin schématique annexé, sur lequel :
- la figure 1 est une vue en coupe longitudinale d'un oeuf fécondé;
- la figure 2 représente un dispositif apte à mettre en oeuvre le procédé de l'invention ; et,
- les figures 3A à 3D illustrent les étapes du procédé de l'invention lorsqu'il est mis en oeuvreavec le dispositif de la figure 2.

Le procédé est appliqué sur des oeufs de volaille ayant au moins 5 jours d'incubation et est appliqué au plus tard deux jours avant la fin du cycle d'incubation (qui correspond à l'éclosion de l'embryon de l'oeuf fécondé), soit entre 5 et 19 jours d'incubation dans le cas d'un oeuf de poulet. A ce stade d'incubation, le sac d'albumen est déjà formé et positionné en partie inférieure de l'oeuf et le contenu du sac d'albumen est isolé structurellement du reste de l'embryon et n'est que très lentement utilisé par l'embryon. Le contenu du sac d'albumen n'est utilisé de façon importante par l'embryon qu'à un stade plus tardif de développement de l'embryon, en toute fin d'incubation. Il est donc possible d'y prélever ou d'y introduire des quantités significatives de matière sans provoquer de chocs osmotiques ou la mort de l'embryon et en évitant des déséquilibres pouvant nuire au développement immédiat ou ultérieur de l'oeuf.

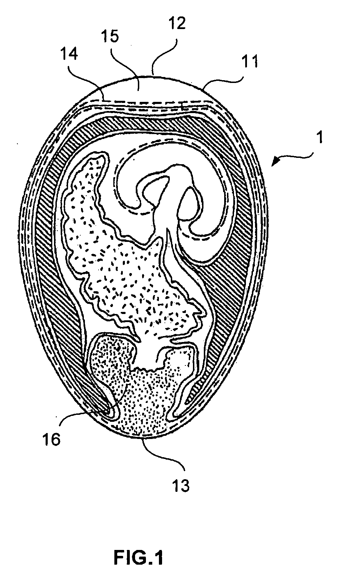

La figure 1 est une vue en coupe longitudinale d'un oeuf fécondé 1 ayant environ 14 jours d'incubation. Cet oeuf comprend une coquille 11 de forme ovoïde présentant une extrémité aplatie 12 et une extrémité pointue 13. L'intérieur de la coquille 11 est tapissé par une membrane coquillière externe très fine (non représentée) et une membrane coquillière interne 14. L'oeuf présente, au niveau de son extrémité aplatie 12, une chambre à air 15 formée entre la membrane coquillière externe et la membrane coquillière interne, et, à proximité de son extrémité pointue 13, un sac d'albumen 16.

Selon l'invention, on effectue une ponction de substance et/ou une injection de substance de traitement dans le sac d'albumen 16 par perçage d'un trou dans la coquille au niveau de l'extrémité pointue de l'oeuf et passage d'une aiguille creuse dans le trou de manière à amener l'extrémité distale de l'aiguille dans le sac d'albumen. Le perçage du trou dans la coquille peut être effectué par l'aiguille ou tout autre moyen.

Dans la suite de la description, on décrira le cas où on ponctionne d'abord de la substance dans le sac d'albumen puis on injecte, à la place de la substance ponctionnée, une substance de traitement, par exemple une substance nutritive liquide destinée à favoriser le développement du poussin après son éclosion.

La quantité de substance ponctionnée et/ou injectée est comprise entre 0,06 ml et 3 ml, de préférence entre 0,5 ml et 2 ml. Avantageusement, la quantité de substance injectée est sensiblement égale à la quantité de substance ponctionnée. La ponction peut être réalisée en une ou plusieurs étapes. Il en est de même pour l'injection.

La ponction est effectuée au moyen d'une aiguille creuse qui est introduite dans l'oeuf au niveau de son extrémité pointue 13. Le sac d'albumen ainsi que les zones traversées par l'aiguille, notamment les membranes coquillières interne et externe, étant des zones non vascularisées de l'oeuf, il n'y a aucun risque de saignement. L'aiguille est introduite dans l'oeuf sur une longueur comprise entre 0,1 cm et 2,5 cm, de préférence entre 0,3 cm et 1,5 cm, pour atteindre le sac d'albumen.

La substance contenue dans le sac d'albumen 16 est ponctionnée en créant une forte dépression, par exemple au moyen d'une pompe à vide, dans l'aiguille et dans la chambre destinée à recevoir la substance afin de casser les liaisons entre les molécules de substance et ne ponctionner qu'une partie du contenu d'un sac d'albumen.

La même aiguille est utilisée ensuite pour effectuer l'injection de substance de traitement dans l'oeuf. Il n'y a donc pas à retirer l'aiguille de l'oeuf après l'opération de ponction.

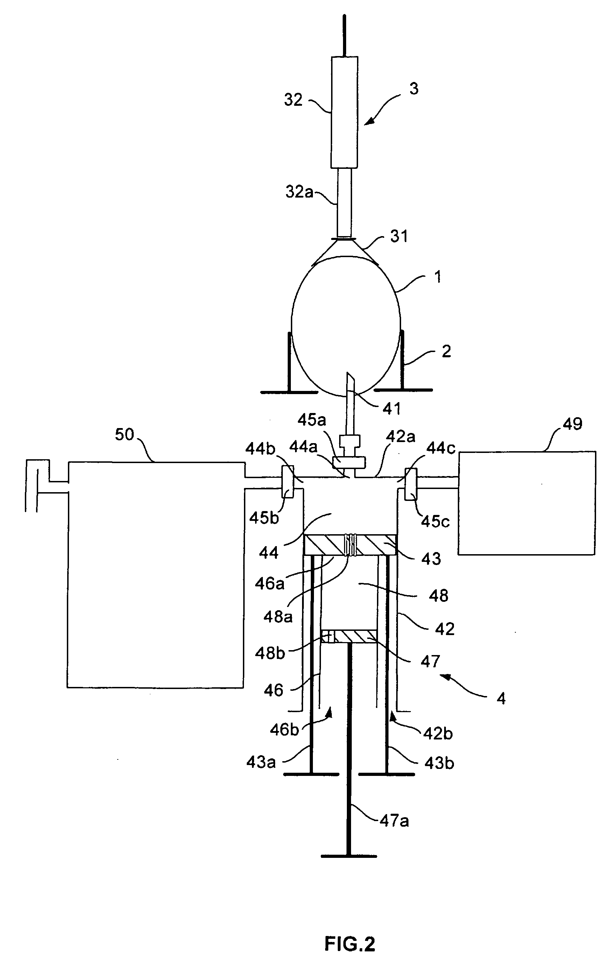

Un schéma de principe d'un système apte à mettre oeuvrele procédé de l'invention est représenté à la figure 2.

Le système comprend un support 2 sur lequel est disposé l'oeuf 1 à traiter, un dispositif de blocage vertical 3 disposé au dessus de l'oeuf à traiter pour le bloquer dans le support 2 et un dispositif de ponction et d'injection 4 pour ponctionner et injecter de la substance dans l'oeuf.

Le support 2 est par exemple un plateau d'incubation ajouré sur le dessous et comportant une pluralité d'alvéoles organisés en rangées et en colonnes et destinés à recevoir chacun un oeuf. L'oeuf à traiter est disposé dans un alvéole de manière à ce que son extrémité pointue soit accessible par le dessous du plateau. L'oeuf est maintenu fixe dans l'alvéole par les parois de l'alvéole et le dispositif de blocage vertical 3. Le dispositif de blocage vertical 3 est par exemple formé d'une coupelle d'appui 31, en matière souple, montée à l'extrémité de la tige 32a d'un vérin 32. Le vérin 32 est apte à déplacer la tige 32a entre une position haute et une position basse. En position basse, la coupelle d'appui 31 est en appui contre l'extrémité aplatie de l'oeuf et empêche tout déplacement vertical de l'oeuf dans l'alvéole.

Le dispositif de ponction et d'injection 4 est positionné dessous le support 2. D'une manière générale, il comprend une aiguille 41 comportant un canal interne en communication avec des moyens de ponction de type seringue et des moyens d'injection.

Les moyens de ponction comprennent un corps tubulaire 42 sensiblement cylindrique avec une extrémité distale 42a fermée et une extrémité proximale 42b ouverte. Un piston 43 est monté coulissant dans le corps tubulaire 42 de manière à définir une première chambre de volume variable 44 destinée à recevoir la substance ponctionnée de l'oeuf. Le piston 43 est raccordé à deux tiges de piston 43a et 43b disposés sensiblement symétriquement par rapport au centre du piston et s'étendant au-delà de l'extrémité proximale 42b. Les deux tiges de piston servent à déplacer le piston dans la chambre 44 entre une position écartée dans laquelle ledit piston est écarté d'une distance non nulle de l'extrémité distale 42a et une position de butée dans laquelle il est en butée contre la paroi de l'extrémité distale 42a. L'extrémité libre des deux tiges de piston coopère éventuellement avec des moyens d'actionnement, de type poussoir, non représentés aptes à déplacer le piston dans la chambre.

Le corps tubulaire 42 est par ailleurs muni à son extrémité distale 42a d'un orifice d'entrée 44a débouchant dans la chambre 44 et apte à être en communication avec le canal interne de l'aiguille 41. Il est également muni, sur sa paroi latérale à proximité de la paroi de l'extrémité distale 42a, d'un orifice de sortie 44b pour refouler hors de la chambre la substance ponctionnée contenue dans la chambre 44 et l'évacuer vers un récipient 50 raccordé à l'orifice de sortie 44b. En variante, l'orifice de sortie 44b est positionné sur l'extrémité distale 42a à coté de l'orifice d'entrée 44a.

Des moyens d'aspiration, telle qu'une pompe à vide 49, sont prévus pour créer une dépression dans la chambre 44 lorsque le piston 43 est en position écartée. Ces moyens d'aspiration sont connectés à un orifice 44c du corps tubulaire débouchant dans la chambre 44.

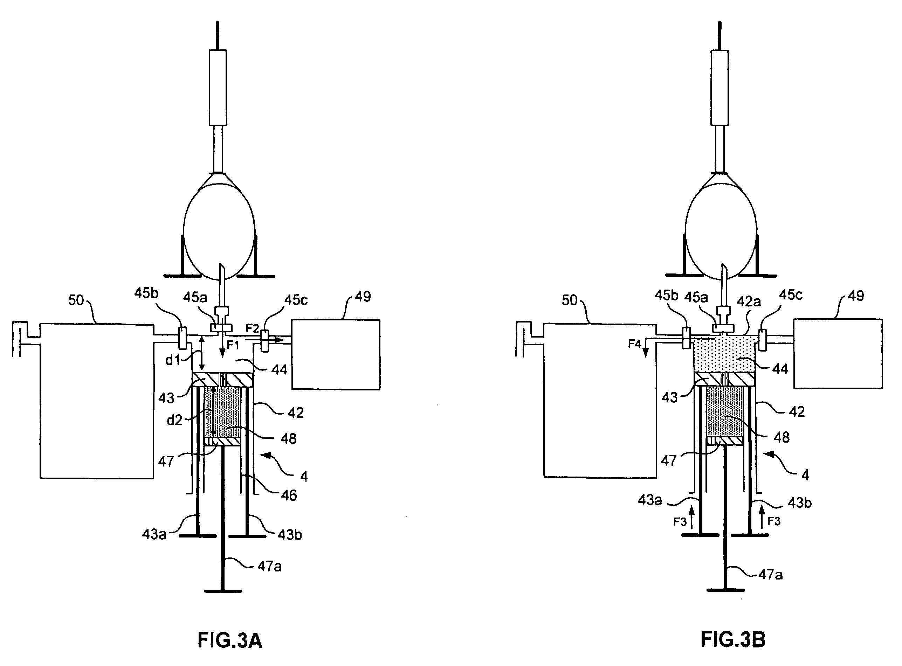

Les orifices 44a, 44b et 44c sont munis d'électrovannes 45a, 45b et 45c commandées en ouverture et ou en fermeture par un circuit de commande non représenté sur la figure 2. Le pilotage des électrovannes sera décrit plus loin dans la description en référence aux figures 3A à 3D illustrant le fonctionnement du système.

Dans le présent mode de réalisation, les moyens d'injection sont montés sur le piston 43 pour des raisons de compacité. Les moyens d'injection comprennent un corps tubulaire 46, monté sur le piston 43 entre les deux tiges de piston 43a et 43b, ayant une extrémité distale 46a fermée correspondant à la paroi inférieure du piston 43 et une extrémité proximale 46b ouverte. Un piston 47 est monté coulissant dans le corps tubulaire 46 de manière à définir une chambre 48 de volume variable destinée à stocker la substance de traitement à injecter. Le piston 47 est raccordé à une tige de piston 47a s'étendant au-delà de l'extrémité proximale 46b. La tige de piston sert à déplacer le piston 47 dans la chambre 48 entre une position écartée dans laquelle il est écarté d'une distance non nulle de l'extrémité distale 46a et une position de butée dans laquelle il est en butée contre la paroi de l'extrémité distale 46a. L'extrémité libre de la tige de piston coopère éventuellement avec des moyens d'actionnement, de type poussoir, non représentés aptes à déplacer le piston dans la chambre 48.

La chambre 48 est dimensionnée pour recevoir une ou plusieurs doses de substance de traitement.

Un orifice de sortie 48a est ménagé dans le piston 43 pour expulser, par déplacement du piston 47 vers l'extrémité distale 48a, la substance de traitement contenue dans la chambre 48 vers le canal interne de l'aiguille lorsque le piston 43 est en position de butée. Dans l'exemple de réalisation, l'orifice de sortie 48a est composé d'une pluralité de trous de section faible, empêchant la substance récoltée dans la chambre 44 de passer dans la chambre 48. L'orifice 48a est positionné pour être en vis-à-vis avec l'orifice 45a lorsque le piston 43 est en butée contre la paroi de l'extrémité distale du corps tubulaire 42. Un orifice 48b destiné à alimenter la chambre 48 en substance de traitement est également ménagé dans le piston 47. Cet orifice est fermé en dehors des phases de remplissage de la chambre 48.

Le système comprend également des moyens de déplacement, non représentés sur la figure, aptes à déplacer le dispositif de ponction et d'injection 4 entre une position de repos dans laquelle l'aiguille est en dehors de l'oeuf à traiter et une ponction active de ponction et/ou d'injection, dite position active, dans laquelle l'extrémité distale de l'aiguille est dans le sac d'albumen de l'oeuf à traiter.

Une description d'un cycle de ponction et d'injection au moyen du système de traitement de l'invention va à présent être effectuée en référence aux figures 3A à 3D. Dans toutes ces figures, on considère que les moyens de déplacement du dispositif de ponction et d'injection sont en position active de sorte que l'extrémité distale de l'aiguille 41 est positionnée dans le sac d'albumen de l'oeuf. On considère également que, lorsque le piston 47 est en position écartée, le volume de la chambre 48 correspondant à une dose de substance de traitement à injecter dans l'oeuf.

La figure 3A illustre le début du cycle. Les pistons 43 et 47 sont en position écartée, les électrovannes 45a et 45c sont en position ouverte et l'électrovanne 45b est en position fermée. La chambre 48 renferme une dose de substance de traitement à injecter.

La pompe à vide 49 crée une dépression dans la chambre 44 de sorte qu'une quantité prédéterminée de substance du sac d'albumen de l'oeuf tombe dans la chambre 44 en suivant la flèche F1. Le déplacement de l'air aspiré par la pompe à vide 49 est représenté par la flèche F2. Le volume V1 de la chambre 44 détermine la quantité de substance à extraire du sac d'albumen. Ce volume est défini par la taille de la section du corps tubulaire 42 et de la distance d1 entre le piston 43 et l'extrémité distale 42a. De même, le volume V2 de la chambre 48, qui correspond dans le présent mode de réalisation à une dose de substance de traitement à injecter, est défini par la taille de la section du corps tubulaire 42 et de la distance d1 entre le piston 43 et l'extrémité distale 42a.

Une quantité de substance correspondant au volume V1se déverse par gravité et sous l'effet de la dépression créée par la pompe à vide dans la chambre 44. La dépression est créée dans la chambre 44 au début de la phase de ponction. Les électrovannes 45a et 45c sont ouvertes au début de cette phase puis l'électrovanne 45c est fermée dès qu'une dépression suffisante est créée dans la chambre 44. Selon une variante, la dépression est créée dans la chambre 44 avant la phase de ponction proprement dite.

La figure 3B illustre la fin de la phase de ponction. Un volume V1 de substance a été prélevé du sac d'albumen de l'oeuf et est désormais présent dans la chambre 44.

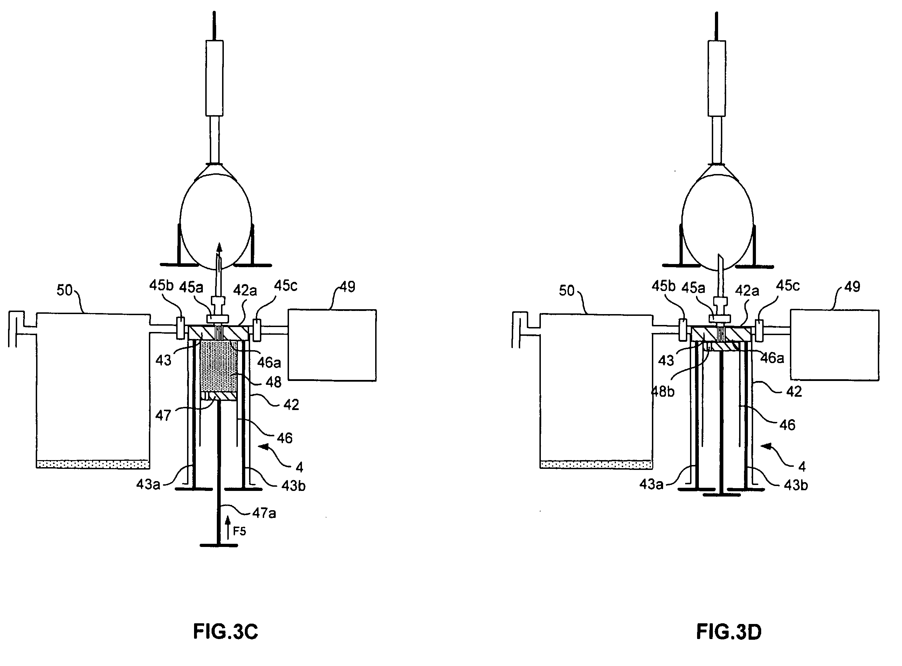

La phase suivante consiste à vider la chambre 44 en ouvrant l'électrovanne 45b et en poussant les tiges de piston 43a et 43b vers l'extrémité distale 42a, comme indiqué par les flèches F3. Le piston 43 coulisse dans la chambre 44 jusqu'à venir en butée contre l'extrémité distale 42a. Pendant cette phase, les électrovannes 45a et 45c sont fermées et le contenu de la chambre 44 est déversé dans le récipient 50 comme indiqué par la flèche F4. A la fin cette phase, le piston 43 est en butée contre l'extrémité distale 42a et la substance ponctionnée est présente dans le récipient 50, comme illustré par la figure 3C. L'orifice de sortie 48a est en vis-à-vis avec l'orifice 44a. L'injection de la substance de traitement contenue dans la chambre 48 peut alors être effectuée en poussant la tige de piston 47a vers l'extrémité distale 46a, comme indiqué par la flèche F5. La tige de piston est poussée pour délivrer une dose de substance de traitement. Dans l'exemple décrit ici, la chambre 48 étant dimensionnée pour recevoir une seule dose de substance de traitement, la tige de piston 47a est donc poussée jusqu'à ce le piston 47 soit en butée contre l'extrémité distale 46a. La figure 3D illustre la fin de cette phase. Le piston 43 est en butée contre l'extrémité distale 42a du corps tubulaire 42 et le piston 47 est en butée contre l'extrémité distale 46a du corps tubulaire 46.

Avant de recommencer un cycle de ponction et d'injection, les pistons 43 et 47 sont ramenés en position rétractée et la chambre 48 est remplie de substance de traitement à partir de l'orifice 48b.

Bien entendu, dans le cas où la chambre 48 est dimensionnée pour recevoir plusieurs doses de substance de traitement, le piston 47 n'est ramené en position rétractée que lorsque toutes les doses ont été injectées (le piston est alors en butée contre l'extrémité distale 46a).

On peut ainsi traiter un oeuf sans avoir à ressortir l'aiguille de l'oeuf. Par ailleurs, après extraction de l'aiguille de l'oeuf, il n'est pas nécessaire de reboucher le trou présent dans la coquille étant donnée la nature compacte de la substance ponctionnée. Un rebouchage du trou peut toutefois être réalisé avec de la cire ou d'autres composés adaptés.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'analyse et/ou de traitement d'un oeuf fécondé, **caractérisé en ce qu'**il comporte une étape de ponction et/ou d'injection de substance dans le sac d'albumen de l'oeuf, ladite étape de ponction et/ou d'injection étant réalisée par perçage d'un trou dans la coquille à proximité de l'extrémité pointue de l'oeuf et passage d'une aiguille creuse dans ledit trou de manière à amener l'extrémité distale de ladite aiguille dans le sac d'albumen.

2. Procédé selon la revendication 1, **caractérisé en ce qu'**il comporte une étape de ponction d'une substance dans le sac d'albumen de l'oeuf suivie d'une étape d'injection d'une substance de traitement.

3. Procédé selon la revendication 2, **caractérisé en ce que** la substance est différente de la substance ponctionnée, dans le sac d'albumen.

4. Procédé selon l'une quelconque des revendications 1 à 3, **caractérisé en ce que** la quantité de substance ponctionnée ou injectée après ponction est comprise entre 0,06 millilitres et 3 millilitres, de préférence entre 0.5 millilitre et 2 millilitres.

5. Procédé selon l'une quelconque des revendications précédentes, **caractérisé en ce que** la substance de traitement injectée est liquide, solide ou gazeuse.

6. Procédé selon l'une quelconque des revendications 2 à 5, **caractérisé en ce que** la quantité de substance de traitement injectée est sensiblement égale à la quantité de substance ponctionnée.

7. Procédé selon l'une quelconque des revendications 2 à 6, **caractérisé en ce que** la même aiguille creuse est employée pour ponctionner la substance du sac d'albumen et injecter la substance de traitement.

8. Procédé selon la revendication 7, **caractérisé en ce que** la ponction et l'injection de substance sont réalisées par le même trou.

9. Procédé selon l'une quelconque des revendications 2 à 8, **caractérisé en ce que** ladite substance de traitement est une substance nutritive, une substance de diagnostic ou une substance thérapeutique.

10. Système de traitement d'un oeuf fécondé, **caractérisé en ce qu'**il comprend au moins un dispositif de ponction et d'injection (4) comprenant:
- une aiguille (41), comprenant au moins un canal interne;
- des moyens de ponction (42, 43, 44, 49), aptes à être en communication avec le canal interne de ladite aiguille, pour ponctionner au travers de ladite aiguille de la substance; et
- des moyens d'injection (46, 47, 48), distincts desdits moyens de ponction et aptes à être en communication avec le canal interne de ladite aiguille, pour injecter au travers de ladite aiguille une substance de traitement, ladite substance traitement se substituant au moins partiellement à la substance ponctionnée.

11. Système selon la revendication 10, **caractérisé en ce que** les moyens de ponction comprennent un premier corps tubulaire (42) et un premier piston monté (43) coulissant dans le premier corps tubulaire de manière a définir une première chambre (44) destinée a recevoir la substance ponctionnée provenant du sac d'albumen de l'oeuf, ledit premier corps tubulaire étant muni d'un orifice d'entrée (44a) débouchant dans ladite première chambre apte a être en communication avec le canal interne de l'aiguille et d'un orifice de sortie (44b) pour refouler, par déplacement dudit premier piston, hors de ladite première chambre la substance ponctionnée, et **en ce que** les moyens d'injection comprennent un second corps tubulaire (46) et un second piston (47) monté coulissant dans le second corps tubulaire de manière a définir une seconde chambre (48) destinée a stocker la substance de traitement à injecter, ledit second corps tubulaire étant muni d'un orifice de sortie (48a) apte à être en communication avec le canal interne de l'aiguille pour refouler par déplacement du second piston la substance de traitement stockée dans ladite deuxième chambre vers l'aiguille.

12. Système selon la revendication 11, **caractérisé en ce que** les moyens de ponction comprennent des moyens d'aspiration (49) aptes à créer une dépression dans ladite première chambre lorsque le premier piston est dans une position écartée.

13. Système selon la revendication 11 ou 12, **caractérisé en ce que** le second corps tubulaire (46) est monté sur le premier piston (43) et **en ce que** l'orifice de sortie (48a) dudit second corps tubulaire est ménagée dans ledit premier piston.

14. Système selon la revendication 13, **caractérisé en ce que** l'orifice de sortie (48a) du second corps tubulaire comporte au moins un trou ayant une section pour empêcher tout passage de substance ponctionnée de ladite première chambre vers ladite seconde chambre.

15. Système selon l'une quelconque des revendications 10 à 14, **caractérisé en ce qu'**il comprend en outre des moyens de déplacement aptes à déplacer le dispositif de ponction et d'injection entre une position de repos dans laquelle l'aiguille est en dehors de l'oeuf à traiter et une ponction active de ponction et/ou d'injection, dite position active, dans laquelle l'extrémité distale de l'aiguille est dans le sac d'albumen de l'oeuf à traiter.

## Patentansprüche

1. Verfahren zum Analysieren und/oder Behandeln eines befruchteten Eis, **dadurch gekennzeichnet, dass** es einen Schritt der Punktion und/oder Injizierens einer Substanz in dem Eiweißsack des Eis umfasst, wobei der Punktions- und/oder Injizierungsschritt durch Stechen eines Lochs in die Schale in die Nähe des spitzen Endes des Eis und Durchführen einer hohlen Nadel durch das Loch in der Weise, dass das distale Ende der Nadel in den Eiweißsack geführt wird, umfasst.

2. Verfahren nach Anspruch 1, **dadurch gekennzeichnet, dass** es einen Schritt der Punktion einer Substanz in den Eiweißsack des Eis, gefolgt von einem Schritt des Injizierens einer Behandlungssubstanz umfasst.

3. Verfahren nach Anspruch 2, **dadurch gekennzeichnet, dass** die Substanz in dem Eiweißsack von der punktierten Substanz verschieden ist.

4. Verfahren nach einem der Ansprüche 1 bis 3, **dadurch gekennzeichnet, dass** die Menge der punktierten oder injizierten Substanz nach der Punktion im Bereich von 0,06 Millilitern bis 3 Millilitern, vorzugsweise von 0,5 Millilitern bis 2 Millilitern, liegt.

5. Verfahren nach einem der vorhergehenden Ansprüche, **dadurch gekennzeichnet, dass** die injizierte Behandlungssubstanz flüssig, fest oder gasförmig ist.

6. Verfahren nach einem der Ansprüche 2 bis 5, **dadurch gekennzeichnet, dass** die Menge der injizierten Behandlungssubstanz im Wesentlichen gleich der Menge der punktierten Substanz ist.

7. Verfahren nach einem der Ansprüche 2 bis 6, **dadurch gekennzeichnet, dass** dieselbe hohle Nadel verwendet wird, um die Substanz des Eiweißsacks zu punktieren und die Behandlungssubstanz zu injizieren.

8. Verfahren nach Anspruch 7, **dadurch gekennzeichnet, dass** die Punktion und das Injizieren der Substanz durch dasselbe Loch erfolgen.

9. Verfahren nach einem der Ansprüche 2 bis 8, **dadurch gekennzeichnet, dass** die Behandlungssubstanz eine Nährsubstanz, eine Diagnosesubstanz oder eine therapeutische Substanz ist.

10. System zum Behandeln eines befruchteten Eis, **dadurch gekennzeichnet, dass** es wenigstens eine Punktions- und Injizierungsvorrichtung (4) umfasst, die umfasst:
- eine Nadel (41), die wenigstens einen inneren Kanal aufweist;
- Punktionsmittel (42, 43, 44, 49), die mit dem inneren Kanal der Nadel kommunizieren können, um die Substanz durch die Nadel hindurch zu punktieren; und
- Injektionsmittel (46, 47, 48), die von den Punktionsmitteln verschieden sind und mit dem inneren Kanal der Nadel kommunizieren können, um eine Behandlungssubstanz durch die Nadel hindurch zu injizieren, wobei die Behandlungssubstanz die punktierte Substanz wenigstens teilweise ersetzt.

11. System nach Anspruch 10, **dadurch gekennzeichnet, dass** die Punktionsmittel einen ersten rohrförmigen Körper (42) und einen ersten Kolben (43), der in dem ersten rohrförmigen Körper gleitend montiert ist, umfassen, derart, dass eine erste Kammer (44) definiert wird, die dazu bestimmt ist, die punktierte Substanz aufzunehmen, die von dem Eiweißsack des Eis stammt, wobei der rohrförmige Körper mit einer Einlassöffnung (44a), die in die erste Kammer mündet und mit dem inneren Kanal der Nadel kommunizieren kann, und mit einer Auslassöffnung (44b), um durch Verlagerung des ersten Kolbens die punktierte Substanz aus der ersten Kammer zu drängen, versehen ist, und dass die Injektionsmittel einen zweiten rohrförmigen Körper (46) und einen zweiten Kolben (47), der in dem zweiten rohrförmigen Körper gleitend montiert ist, umfassen, derart, dass eine zweite Kammer (48) definiert wird, die dazu bestimmt ist, die zu injizierende Behandlungssubstanz aufzubewahren, wobei der zweite rohrförmige Körper mit einer Auslassöffnung (48a) versehen ist, die mit dem inneren Kanal der Nadel kommunizieren kann, um durch Verlagerung des zweiten Kolbens die Behandlungssubstanz, die in der zweiten Kammer aufbewahrt wird, zu der Nadel auszustoßen.

12. System nach Anspruch 11, **dadurch gekennzeichnet, dass** die Punktionsmittel Saugmittel (49) umfassen, die in der ersten Kammer einen Unterdruck erzeugen können, wenn der erste Kolben in einer beabstandeten Position ist.

13. System nach Anspruch 11 oder 12, **dadurch gekennzeichnet, dass** der zweite rohrförmige Körper (46) an dem ersten Kolben (43) montiert ist und dass die Auslassöffnung (48a) des zweiten rohrförmigen Körpers in dem ersten Kolben ausgespart ist.

14. System nach Anspruch 13, **dadurch gekennzeichnet, dass** die Auslassöffnung (48a) des zweiten rohrförmigen Körpers wenigstens ein Loch aufweist, das einen Querschnitt besitzt, um jeglichen Durchgang der punktierten Substanz von der ersten Kammer zu der zweiten Kammer zu verhindern.

15. System nach einem der Ansprüche 10 bis 14, **dadurch gekennzeichnet, dass** es außerdem Verlagerungsmittel umfasst, die die Punktions- und Injizierungsvorrichtung zwischen einer Ruheposition, in der sich die Nadel außerhalb des zu behandelnden Eis befindet, und einer aktiven Punktions- und/oder Injektionsposition, die aktive Position genannt wird und in der sich das distale Ende der Nadel in dem Eiweißsack des zu behandelnden Eis befindet, verlagern können.

## Claims

1. A method of analyzing and/or treating a fertilized egg, **characterized in that** the method comprises a step of tapping and/or injecting substance into the albumin sac of the egg, said tapping and/or injecting step being carried out by piercing a hole in the shell next to the pointed end of the egg and passing a hollow needle into said hole so as to lead the distal end of said needle into the albumin sac.

2. The method according to claim 1, **characterized in that** the method comprises a step of tapping a substance in the albumin sac of the egg followed by a step of injecting a treating substance.

3. The method according to claim 2, **characterized in that** the substance is different from the tapped substance in the albumin sac.

4. The method according to any one of claims 1 to 3, **characterized in that** the quantity of substance tapped or injected after tapping is between 0.06 milliliters and 3 milliliters, preferably between 0.5 milliliters and 2 milliliters.

5. The method according to any one of the previous claims, **characterized in that** the injected treating substance is liquid, solid or gaseous.

6. The method according to any one of claims 2 to 5, **characterized in that** the quantity of treating substance injected is substantially equal to the quantity of tapped substance.

7. The method according to any one of claims 2 to 6, **characterized in that** the same hollow needle is used to tap the albumin sac substance and inject the treating substance.

8. The method according to claim 7, **characterized in that** the substance tapping and injecting are carried out by the same hole.

9. The method according to any one of claims 2 to 8, **characterized in that** said treating substance is a nutritious, diagnostic or therapeutic substance.

10. A system of treating a fertilized egg, **characterized in that** the system comprises at least one tapping and injecting device (4) comprising:
- a needle (41), comprising at least one inner duct;
- tapping means (42, 43, 44, 49) able to communicate with the inner duct, to tap the substance through said needle; and
- injecting means (46, 47, 48), distinct from said tapping means and able to communicate with the inner duct of said needle, to inject a treating substance through said needle, said treating substance at least partially substituting for the tapped substance.

11. The system according to claim 10, **characterized in that** the tapping means comprise a first tubular body (42), and a first piston (43) slidingly mounted in the first tubular body so as to define a first chamber (44) intended to receive the tapped substance from the albumin sac of the egg, said first tubular body being equipped with an inlet orifice (44a) opening into said first chamber and able to communicate with the inner duct of the needle and an outlet orifice (44b) to discharge the tapped substance out of said first chamber, by moving said first piston, and **in that** the injection means comprise a second tubular body (46) and a second piston (47) slidingly mounted in the second tubular body so as to define a second chamber (48) intended to store the treating substance to be injected, said second tubular body being equipped with an outlet orifice (48a) able to communicate with the inner duct of the needle to discharge the treating substance stored in said second chamber by moving the second piston towards the needle.

12. The system according to claim 11, **characterized in that** the tapping means comprise suction means (49) able to create a vacuum in said first chamber when the first piston is in a spaced-apart position.

13. The system according to claim 11 or claim 12, **characterized in that** the second tubular body (46) is mounted on the first piston (43) and **in that** the outlet orifice (48a) of said second tubular body is arranged in said first piston.

14. The system according to claim 13, **characterized in that** the outlet orifice (48a) of the second tubular body comprises at least one hole having a section to prevent any passage of tapped substance from said first chamber to said second chamber.

15. The system according to any one of claims 10 to 14, **characterized in that** the system also comprises displacement means able to move the tapping and injecting device between a rest position in which the needle is outside the egg to be treated and an active tapping and/or injecting position, called active position, in which the distal end of the needle is in the albumin sac of the egg to be treated.
